# EUROPEAN PATENT SPECIFICATION

(11) **EP 2 692 712 B1**
(45) Date of publication and mention of the grant of the patent: **07.08.2019**
(21) Application number: 12763683.5
(22) Date of filing: 30.03.2012
(51) Int. Cl.: C04B 35/80, C04B 41/68, C04B 35/14, C04B 35/18, C04B 35/195, C04B 35/626, C04B 35/63, C04B 28/24, C04B 41/50, C04B 41/00, C04B 35/632

(54) **METHOD OF HARDENING A SHAPED ARTICLE**
VERFAHREN ZUM ERHÄRTEN EINES FORMKÖRPERS
PROCÉDÉ DE DURCISSEMENT D'UN ARTICLE MIS EN FORME

(30) Priority: 30.03.2011 JP 2011074261
(43) Date of publication of application: 05.02.2014
(73) Proprietor: Nichias Corporation, Tokyo 104-8555 (JP)
(72) Inventor: KISHIKI, Tomohiko, Tokyo 105-8555 (JP); MIHARA, Tetsuya, Tokyo 105-8555 (JP); YONAIYAMA, Ken, Tokyo 105-8555 (JP); ISHIHARA, Tetsuya, Tokyo 105-8555 (JP)
(74) Representative: Schmitz, Joseph
(86) International application number: PCT/JP2012/002241
(87) International publication number: WO 2012/132469

(56) References cited:
- WO-A2-2007/143067
- JP-A- 2000 086 361
- JP-A- 2002 029 865
- JP-A- 2006 306 713
- JP-A- 2007 197 870
- JP-A- 2007 211 958
- JP-A- 2008 162 853
- JP-A- 2008 162 853
- JP-B1- 45 014 897
- US-A- 3 944 702
- US-A- 4 552 804
- US-A- 5 851 465

## Description

### Technical Field

The invention relates to a method of hardening a shaped article formed of inorganic fibers.

### Background Art

Inorganic fibers are lightweight, easy to handle and excellent in heat resistance, and hence, they are used as a heat resisting sealing material, for example. On the other hand, in recent years, a problem has been pointed out that inorganic fibers are inhaled into a human body and the inhaled fibers invade the lung to cause disorders. Under such circumstances, bio-soluble inorganic fibers which do not cause or hardly cause disorders even if inhaled into a human body have been developed.

However, a shaped article produced with such bio-soluble fibers has a drawback of low absolute strength.

Patent Document 1 discloses a mastics containing bio-soluble alkaline earth metal silicate fibers and colloidal silica. Patent Document 1 describes that the mastics could exhibit excellent storage stability by using the colloidal silica as a binder and the storage stability could be improved by further containing a chelating agent such as EDTA (ethylene diamine tetraacetate).

Patent Document 2 discloses a Xonotlite-type calcium silicate board is impregnated with an inorganic binder in order to suppress generation of dust.

WO2007/143067A2 describes a thermal insulation article comprising an inorganic-fiber blanket impregnated and pressed with a colloidal inorganic oxide containing a gelling agent.

JP-A-2008-162853 discloses inorganic fibrous molded articles containing bio-soluble inorganic fibers, inorganic fine particles and a binder.

US 3 944 702 A relates to an insulating fibre mat bonded with a dispersion of colloidal silica and a partial condensate of a silanol.

WO00/15573 A1 discloses refractory mastics comprising saline soluble fibres bonded with a binder comprising colloidal silica.

US 5 851 465 A describes a binder composition for use in three dimensional printing.

### Related Art Documents

### [Patent Documents]

Patent Document 1: JP-A-2002-524384
Patent Document 2: JP-A-2008-13402

### Summary of the Invention

### Subject to be Solved by the Invention

The invention has been made in view of the above-mentioned problem, and one object thereof is to provide a high-strength shaped article comprising inorganic fibers.

### Means for Solving the Problems

As a result of intensive studies, the inventors have found that a shaped article can be improved in the strength by a treatment with a hardening agent, and have completed the invention.

According to the invention, a method of hardening a shaped article according to claims 1-12 is provided.

According to the invention, a high-strength shaped article comprising inorganic fibers can be provided.

### Brief Description of the Drawings

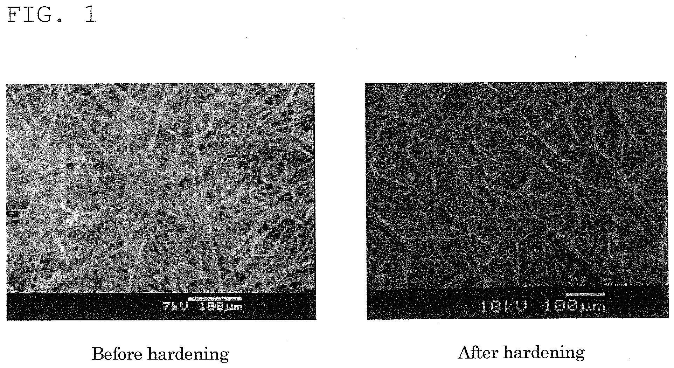

FIG. 1 is photographs of the surfaces before and after hardening of the inorganic board of Example 1.

### Mode for Carrying out the Invention

A hardened shaped article produced by the method of the invention is obtained by treating a shaped article formed using inorganic fibers comprising SiO₂ and an alkaline earth metal with a hardening agent. As the hardening agent, colloidal silica is used. The colloidal silica includes alkaline colloidal silica (pH8 to 10), acidic colloidal silica (pH2 to 6) and cationic colloidal silica.

The hardening treatment is carried out by immersing a shaped article in a hardening treatment solution, or applying (brushing, rolling or the like) or blowing (showering, spraying or the like) a hardening treatment solution to a shaped article, followed by drying, for example. Since the solvent evaporates from the surface when drying, the solvent moves to the surface, and at the same time, the colloidal silica also moves to the surface. Since colloidal silica remains even if the solvent has evaporated, colloidal silica is unevenly distributed in the vicinity of the surface, whereby the surface is hardened. As a solvent, water, monovalent alcohols such as ethanol and propanol, and divalent alcohols such as ethyleneglycol can be used.

The amount of colloidal silica contained in the shaped article by the hardening treatment is an amount to increase in density by 10% to 150%, preferably by 10% to 100%, and more preferably by 10% to 50%. The shaped article is usually immersed in colloidal silica having a solid content ratio of 10% to 30% for one second to several minutes, but not be limited to. The treatment may be conducted once or twice or more. Water content in the shaped article after hardening treatment is usually about 5 wt% or less. The water content is confirmed based on the weights before and after drying.

By the above-mentioned hardening treatment, hardness increases and strength and handling properties (problems such as hand marks after grasping, nipping out during processing, no sharp corner caused by cutting, and falling of dust) are improved.

When a shaped article is treated with alkaline colloidal silica as the hardening agent, alkaline earth metal ions, in particular Ca ion and Mg ion are 4 eluted to the hardening treatment solution. The ions may react with the hardening agent at the surface of the shaped article, causing generation of cracks when heated to a temperature of 800°C or higher. The reason therefor may be that the reaction of silica and Ca ions, etc. causes change in volume.

To suppress the generation of cracks, a shaped article is treated with a metal ion-free chelating agent and a hardening agent. The inventors consider that the chelating agent traps the eluted alkaline earth metal and forms a protective layer at the same time to suppress the reaction of the alkaline earth metal and the hardening agent and to prevent cracks from generating. The chelating agent has two or more electron-donating groups, and therefore it can form a metal chelate compound. The electron-donating group includes a carboxy group and a hydroxy group. The chelating agent used in the invention does not contain alkaline earth metals and alkali metals. Examples of the chelating agent include one having a composition of EDTA (ethylene diamine tetraacetate)·H·3(NH₄) and one having a composition of EDTA·2H·2(NH₄).

As the hardening agent used together with the chelating agent, colloidal silica is used. The colloidal silica includes alkaline colloidal silica, acidic colloidal silica and cationic colloidal silica. The concentration of the chelating agent can be arbitrarily set. When using the alkaline colloidal silica as the hardening agent, it is preferably used in a concentration of 0.5 wt% or more, relative to the hardening treatment solution having a solid content of 10 wt%.

Alternatively, to suppress the generation of cracks, a shaped article is treated with a hardening treatment solution having a pH value of 6 or lower (preferably a pH value of 1 to 6, more preferably 2 to 5, and particularly preferably 3 to 5). By making the hardening treatment solution to be acidic, elution of an alkaline earth metal is suppressed. As a result, the inventors consider that the reaction of the alkaline earth metal and the hardening agent is suppressed so that the generation of cracks is prevented.

A shaped article is treated with an acid and the hardening agent. The acid may be a week acid or a strong acid. The week acid includes citric acid, malic acid, tartaric acid, salicylic acid, glycolic acid, lactic acid, mandelic acid, benzilic acid, coumaric acid and acetic acid. The strong acid includes sulfuric acid, hydrochloric acid and nitric acid. In view of no trouble with generation of gas, the week acid is preferable.

Also, acidic colloidal silica (for example, one having a pH value of 1 to 6 or 2 to 5) may be used. As the acidic colloidal silica, commercial products such as SILICADOL 20A (manufactured by Nippon Chemical Industrial Co., Ltd., a solid content ratio of 20%), CATALOID SN (manufactured by JGC Catalysts and Chemicals Ltd., a solid content ratio of 20%), etc. may be used.

As substances having both of the chelating effect and the nature of making the pH to be acidic, hydroxy acids such as citric acid, malic acid, tartaric acid and salicylic acid may be given.

When cationic colloidal silica (for example, one having a pH value of 4 to 6) is used as the hardening agent, elution of an alkaline earth metal can be suppressed. In this case, the inventors consider that the cationic colloidal silica forms a protective film on the surface of a shaped article to suppress the reaction of the alkaline earth metal and the hardening agent. The cationic colloidal silica is colloidal silica having a positive charge at the surface. For example, one may be given which contains a multivalent metal ion such as aluminum ion or an organic cationic compound on the surface or inside of the colloidal silica particles, and thus has the cation-charged surface. As the cationic colloidal silica, commercial products such as SNOWTEX AK (manufactured by Nissan Chemical Industries Ltd., a solid content ratio of 18%) may be used.

The shaped article of the invention is constituted by containing inorganic fibers. It contains 20 to 99 wt% (preferably 30 to 95 wt%) of the inorganic fibers. The inorganic fibers are formed of SiO₂, CaO and MgO as main components. The "main components" means that total of these substances occupy 90 wt% or more, or 95 wt% or more.

The inorganic fibers are bio-soluble fibers having for instance the following composition.
Total of SiO₂, ZrO₂, Al₂O₃ and TiO₂: 50 wt% to 82 wt%
Total of alkali metal oxides and alkaline earth metal oxides: 18 wt% to 50 wt%

Also, the inorganic fibers may be bio-soluble fibers having the following composition.
SiO₂: 50 to 82 wt%
Total of CaO and MgO: 10 to 43 wt%

The bio-soluble fibers are divided roughly to Mg silicate fibers containing more MgO and Ca silicate fibers containing more CaO. As the Mg silicate fibers, one having the following composition can be exemplified.
SiO₂: 66 to 82 wt%
CaO: 1 to 9 wt%
MgO: 10 to 30 wt%
Al₂O₃: 3 wt% or less
Other oxides: less than 2 wt%

As the Ca silicate fibers, one having the following composition can be exemplified.
SiO₂: 66 to 82 wt% (for example, it can be 68 to 80 wt%, 70 to 80 wt%, 71 to 80 wt% or 71 to 76 wt%)
CaO: 10 to 34 wt% (for example, it can be 18 to 32 wt%, 20 to 30 wt%, 20 to 27 wt%, or 21 to 26 wt%)
MgO: 3 wt% or less (for example, it can be 1 wt% or less)
Al₂O₃: 5 wt% or less (for example, it can be 3.5 wt% or less, 3.4 wt% or less, or 3 wt% or less, and it can be 1 wt% or more, 1.1 wt% or more, or 2 wt% or more)
Other oxides: less than 2 wt%

If SiO₂ is in the above-mentioned range, excellent heat resistance can be exhibited. If CaO and MgO are in the above-mentioned ranges, excellent biosolubility before and after heating can be exhibited. If Al₂O₃ is in the above-mentioned range, excellent heat resistance can be exhibited.

Further, total of SiO₂, CaO, MgO and Al₂O₃ may be more than 98wt% or more than 99 wt%.

The above-mentioned biosoluble inorganic fibers may or may not contain, as other components, one or more components selected from alkali metal oxides (K₂O, Na₂O, Li₂O or the like), oxides of a component selected from Sc, La, Ce, Pr, Nd, Sm, Eu, Gd, Tb, Dy, Ho, Er, Tm, Yb, Lu, Y or a mixture thereof, Fe₂O₃, ZrO₂, TiO₂, P₂O₃, B₂O₃, MnO, ZnO, SrO, BaO, Cr₂O₃, or the like. Each of other oxides may be contained in an amount of 1.0 wt% or less, 0.2 wt% or less, or 0.1 wt% or less. Each of alkali metal oxides may be contained in an amount of 1.0 wt% or less, 0.2 wt% or less, or 0.1 wt% or less. Further, the total amount of alkali metal oxides may be 1.0 wt% or less, 0.2 wt% or less, or 0.1 wt% or less.

The bio-soluble fibers may contain other components in addition to SiO₂ and the alkaline earth metal oxides (for example, at least one of MgO and CaO). The bio-soluble fibers may further contain, for example, one, or two or more selected from the group consisting of alumina (Al₂O₃), titania (TiO₂), zirconia (ZrO₂), iron oxide (Fe₂O₃), manganese oxide (MnO) and potassium oxide (K₂O).

Bio-soluble inorganic fibers are inorganic fibers having a physiological saline dissolution ratio at 40°C of 1% or more.

The physiological saline dissolution ratio can be measured by the following method, for example. Specifically, at first, 1 g of a sample obtained by pulverizing inorganic fibers to 200 meshes or less and 150 mL of a physiological saline solution are charged in a conical flask (volume: 300 mL) and the flask is installed in an incubator at 40°C. Next, the conical flask is continuously subjected to horizontal vibration of 120 rotations per minute for 50 hours. Subsequently, the concentrations of elements (mg/L) contained in a filtrate obtained by filtration are each measured by means of an ICP emission spectroscopic analyzer. Then, the physiologically saline dissolution ratio (%) is calculated based on the measured concentrations of the elements and the contents (mass%) of the elements in inorganic fibers before dissolution. Specifically, if the elements subjected to the measurement are silicon (Si), magnesium (Mg), calcium (Ca) and aluminum (Al), the physiologically saline dissolution ratio C (%) is calculated according to the following formula: C(%) = [Amount of filtrate (L) × (a1 + a2 + a3 + a4) × 100] / [Mass of inorganic fibers before dissolution (mg) × (b1 + b2 + b3 + b4) / 100]. In this formula, a1, a2, a3 and a4 are the measured concentrations (mg/L) of silicon, magnesium, calcium and aluminum, respectively, and b1, b2, b3 and b4 are the contents (mass%) of silicon, magnesium, calcium and aluminum contained in inorganic fibers before dissolution, respectively.

The shaped article includes articles formed of inorganic fibers such as molds, blankets, blocks, boards, papers and felts, other than shapeless articles such as mastics (which may contain an inorganic and/or an organic binder). However, the shaped article of the invention comprising inorganic fibers does not include Xonotlite-type calcium silicate boards as disclosed in Patent Document 2.

The shaped article can contain an organic binder, an inorganic binder, an inorganic filler, etc., in addition to the inorganic fibers. As these components, ones usually used can be employed, as long as they do not impair the effect of the invention. The organic binder includes starches, acrylic resins, polyacrylamides, pulps and acrylic emulsions. The inorganic binder includes colloidal silica such as anionic colloidal silica and cationic colloidal silica, alumina sol, bentonite and clay minerals.

According to the method of the invention, the hardened shaped article is obtained by the above-mentioned treatment so that the hardening agent is impregnated from the surface thereof.

### EXAMPLES

### Production Example 1

### <Production of Organic and Inorganic Boards (Shaped Article)>

An organic board having a size of 300 mm in length, 300 mm in width and 50 mm in thickness (density: 250 kg/m³) was produced from 90 wt% of bio-soluble fibers A (content of SiO₂: 73 mass%, content of CaO: 25 mass%, content of MgO: 0.3 mass%, and content of Al₂O₃: 2 mass%), starch and polyacrylamide (organic binder), and colloidal silica (inorganic binder).

Also, An inorganic board having a size of 300 mm in length, 300 mm in width and 50 mm in thickness (density: 250 kg/m³) was produced from 85 wt% of the bio-soluble fibers A, colloidal silica, an alumina sol and bentonite (inorganic binder), inorganic fine particles (silica, zircon, calcium carbonate, zirconia, cordierite, wollastonite, etc.), and acrylamide (organic binder).

### Production Example 2

### <Production of Organic and Inorganic Boards (Shaped Article)>

An organic board and an inorganic board were produced in the same manner as in Production Example 1 except that bio-soluble fibers B (content of SiO₂: 76 mass%, content of CaO: 4 mass%, content of MgO: 18 mass%, and content of Al₂O₃: 2 mass%) were used in place of the bio-soluble fibers A.

### Example 1 (not according to the invention)

### <Hardening Treatment

The organic board and inorganic board (density: 250 kg/m³) produced in Production Example 1 were treated (immersing for 1 to 10 seconds) with a hardening solution containing alkaline colloidal silica (pH: approximately 9, solvent: water) to harden and dry the surfaces of the boards. The density was 300 kg/m³. The strength of the boards increased after hardening. The photographs of the surfaces before and after hardening are shown in FIG. 1. Further, hardness of the hardened organic and inorganic boards were measured by a hardness tester (ASKER Rubber Hardness Tester C type manufactured by ASKER). Table 1 shows the results.

### Comparative Example 1

The organic and inorganic boards produced in Production Example 1 were evaluated without conducting the hardening treatment. Both the organic and inorganic boards were brittle. The hardnesses thereof were measured in the same manner an in Example 1. Table 1 shows the results.

**Table 1**

| Fiber (A) | | | | |
|---|---|---|---|---|
| | Organic Board | | Inorganic Board | |
| | Before hardening | After hardening | Before hardening | After hardening |
| Hardness (°) | 50 | 85 | 40 | 75 |

### Example 2 (not according to the invention)

### <Hardening Treatment

The hardening treatment was carried out in the same manner as in Example 1 except that the organic board and inorganic board produced in Production Example 2 were used. Hardness was measured in the same manner as in Example 1. Table 2 shows the results.

### Comparative Example 2

The organic and inorganic boards produced in Production Example 2 were evaluated without conducting the hardening treatment. Both the organic and inorganic boards were brittle. The hardnesses thereof were measured in the same manner an in Example 1. Table 2 shows the results.

**Table 2**

| Fiber (B) | | | | |
|---|---|---|---|---|
| | Organic Board | | Inorganic Board | |
| | Before hardening | After hardening | Before hardening | After hardening |
| Hardness (°) | 50 | 70 | 45 | 65 |

### Example 3

### [Chelating Agent and Hardening Agent]

### <Hardening Treatment>

The organic and inorganic boards produced in Production Example 1 were treated with a hardening treatment solution (pH: approximately 9, solvent: water) containing EDTA diammonium salt and alkaline colloidal silica to harden and dry the surface thereof. The chelating agent was used in an amount of 1 wt%, relative to the hardening treatment solution having a solid content of 10 wt%.

### <Heating Test>

The hardened organic and inorganic boards were heated at a temperature of 800 °C, 900 °C, 1000 °C and 1100 °C for 24 hours, respectively, and the outer appearances (with or without a crack) thereof were observed visually. For comparison, the hardened organic and inorganic boards produced in Example 1 were also heated in the same manner and observed visually. One with no cracks is represented by "⊚", one wherein small cracks are generated on the surface by "○", one wherein large cracks are generated on the surface by "▲", and broken one by " × ". Table 3 shows the results.

**Table 3**

| | | 800°C | 900 °C | 1000 °C | 1100 °C |
|---|---|---|---|---|---|
| Alkaline colloidal silica | Organic Board | ⊚ | ○ | ▲ | × |
| Alkaline colloidal silica | Inorganic Board | ⊚ | ⊚ | ⊚ | ▲ |
| Alkaline colloidal silica + Chelating agent | Organic Board | ⊚ | ⊚ | ⊚ | ⊚ |
| Alkaline colloidal silica + Chelating agent | Inorganic Board | ⊚ | ⊚ | ⊚ | ⊚ |

### Example 4

### [Acid and Hardening Agent]

### <Hardening Treatment

The organic and inorganic boards produced in Production Example 1 were treated with a hardening treatment solution containing an acid and alkaline colloidal silica (hardening agent) to harden and dry the surface thereof. As the acid, citric acid, malic acid, tartaric acid and salicylic acid were used in an amount of about 1 wt%, relative to the hardening treatment solution having a solid content of 10 wt%, to adjust the treatment solutions to pH 3 to4.

### <Heating Test>

The tests are conducted in the same manner as in Example 3. Tables 4 and 5 show the results.

**Table 4**

| Organic Board (Fiber A) | | | | |
|---|---|---|---|---|
| Hardening treatment solution | 800°C | 900°C | 1000°C | 1100°C |
| Alkaline colloidal silica + citric acid | ⊚ | ⊚ | ⊚ | ⊚ |
| Alkaline colloidal silica + malic acid | ⊚ | ⊚ | ⊚ | ⊚ |
| Alkaline colloidal silica + tartaric acid | ⊚ | ⊚ | ⊚ | ⊚ |
| Alkaline colloidal silica + salicylic acid | ⊚ | ⊚ | ⊚ | ⊚ |

**Table 5**

| Inorganic Board (Fiber A) | | | | |
|---|---|---|---|---|
| Hardening treatment solution | 800°C | 900°C | 1000°C | 1100°C |
| Alkaline colloidal silica + citric acid | ⊚ | ⊚ | ⊚ | ⊚ |
| Alkaline colloidal silica + malic acid | ⊚ | ⊚ | ⊚ | ⊚ |
| Alkaline colloidal silica + tartaric acid | ⊚ | ⊚ | ⊚ | ⊚ |
| Alkaline colloidal silica + salicylic acid | ⊚ | ⊚ | ⊚ | ⊚ |

### Example 5

### [Acid and Hardening Agent]

### <Hardening Treatment

The organic and inorganic boards produced in Production Example 1 were treated with the hardening treatment solution containing citric acid and alkaline colloidal silica (hardening agent) to harden and dry the surface thereof. Citric acid was used in amounts of 0.4 wt%, 0.6 wt%, 1.5 wt% and 8 wt% to adjust the treatment solution to pH 2 to 5.

### <Heating Test>

The test was conducted in the same manner as in Example 3. Table 6 shows the results.

**Table 6**

| 800°C×24h | | | | |
|---|---|---|---|---|
| pH | 5 | 4 | 3 | 2 |
| Organic Board | ⊚ | ⊚ | ⊚ | ⊚ |
| Inorganic Board | ⊚ | ⊚ | ⊚ | ⊚ |
| | | | | |

| 900°C×24h | | | | |
|---|---|---|---|---|
| pH | 5 | 4 | 3 | 2 |
| Organic Board | ⊚ | ⊚ | ⊚ | ⊚ |
| Inorganic Board | ⊚ | ⊚ | ⊚ | ⊚ |
| | | | | |

| 1000°C×24h | | | | |
|---|---|---|---|---|
| pH | 5 | 4 | 3 | 2 |
| Organic Board | ⊚ | ⊚ | ⊚ | ⊚ |
| Inorganic board | ⊚ | ⊚ | ⊚ | ⊚ |
| | | | | |

| 1100°C×24h | | | | |
|---|---|---|---|---|
| pH | 5 | 4 | 3 | 2 |
| Organic Board | ⊚ | ⊚ | ⊚ | ⊚ |
| Inorganic Board | ⊚ | ⊚ | ⊚ | ⊚ |

### Example 6

### [Acid and Hardening Agent]

### <Hardening Treatment>

The treatment was conducted in the same manner as in Example 4 except that the organic board and inorganic board produced in Production Example 2 were used.

### <Heating Test>

The test was conducted in the same manner as in Example 4. For comparison, the hardened organic and inorganic boards obtained in Example 2 were heated and observed in the same manner as in Example 4. Tables 7 and 8 show the results.

**Table 7**

| Organic Board (Fiber B) | | | | |
|---|---|---|---|---|
| Hardening treatment solution | 800°C | 900°C | 1000°C | 1100°C |
| Alkaline colloidal silica | ○ | ○ | ▲ | × |
| Alkaline colloidal silica + citric acid | ⊚ | ⊚ | ⊚ | ⊚ |
| Alkaline colloidal silica + malic acid | ⊚ | ⊚ | ○ | ▲ |
| Alkaline colloidal silica + tartaric acid | ⊚ | ⊚ | ○ | ▲ |
| Alkaline colloidal silica + salicylic acid | ⊚ | ⊚ | ⊚ | ○ |

**Table 8**

| Inorganic Board (Fiber B) | | | | |
|---|---|---|---|---|
| Hardening treatment solution | 800°C | 900°C | 1000°C | 1100°C |
| Alkaline colloidal silica | ⊚ | ○ | ▲ | × |
| Alkaline colloidal silica + citric acid | ⊚ | ⊚ | ⊚ | ⊚ |
| Alkaline colloidal silica + malic acid | ⊚ | ⊚ | ⊚ | ○ |
| Alkaline colloidal silica + tartaric acid | ⊚ | ⊚ | ⊚ | ○ |
| Alkaline colloidal silica + salicylic acid | ⊚ | ⊚ | ○ | ▲ |

### Example 7 (not according to the invention)

### [Acidic Colloidal Silica and Cationic Colloidal Silica]

### <Hardening treatment

The organic board and inorganic board produced in Production Example 1 were treated with acidic colloidal silica (SILICADOL 20A (manufactured by Nippon Chemical Industrial Co., Ltd.), pH 2 to 4) or cationic colloidal silica (SNOWTEX AK (manufactured by Nissan Chemical Industries Ltd.)) (hardening agent) to harden and dry the surface thereof.

### <Heating Test>

The test was conducted in the same manner as in Example 3. Tables 9 and 10 show the results.

**Table 9**

| Organic Board (Fiber A) | | | | |
|---|---|---|---|---|
| Hardening treatment solution | 800°C | 900°C | 1000°C | 1100°C |
| Acidic colloidal silica | ⊚ | ⊚ | ⊚ | ⊚ |
| Cationic colloidal silica | ⊚ | ⊚ | ⊚ | ⊚ |

**Table 10**

| Inorganic Board (Fiber A) | | | | |
|---|---|---|---|---|
| Hardening treatment solution | 800°C | 900°C | 1000°C | 1100°C |
| Acidic colloidal silica | ⊚ | ⊚ | ⊚ | ⊚ |
| Cationic colloidal silica | ⊚ | ⊚ | ⊚ | ⊚ |

### Example 8 (not according to the invention)

### [Acidic Colloidal Silica and Cationic Colloidal Silica]

### <Hardening Treatment

The treatment was conducted in the same manner as in Example 7 except that the organic board and inorganic board produced in Production Example 2 were used.

### <Heating Test>

The test was conducted in the same manner as in Example 7. Tables 11 and 12 show the results.

**Table 11**

| Organic Board (Fiber B) | | | | |
|---|---|---|---|---|
| Hardening treatment solution | 800°C | 900°C | 1000°C | 1100°C |
| Acidic colloidal silica | ⊚ | ⊚ | ⊚ | ⊚ |
| Cationic colloidal silica | ⊚ | ⊚ | ⊚ | ⊚ |

**Table 12**

| Inorganic Board (Fiber B) | | | | |
|---|---|---|---|---|
| Hardening treatment solution | 800°C | 900°C | 1000°C | 1100°C |
| Acidic colloidal silica | ⊚ | ⊚ | ⊚ | ⊚ |
| Cationic colloidal silica | ⊚ | ⊚ | ⊚ | ⊚ |

### INDUSTRIAL APPLICABILITY

The hardened shaped article of the invention can be used for various uses as general heat insulating materials for high temperature, heat insulating lining materials for a ceiling and wall of furnace, heat insulating materials and backup materials.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

## Claims

1. A method of hardening a shaped article consisting of:
impregnating a shaped article comprising 20 wt% to 99 wt% of bio-soluble inorganic fibers with a hardening treatment solution from a surface thereof, the bio-soluble inorganic fibers comprising 90 wt% or more of SiO₂, CaO and MgO and having a physiological saline dissolution ratio at 40°C of 1% or more, the hardening treatment solution consisting of colloidal silica, a metal ion free-chelating agent or an acid, and a solvent; and subsequently
drying the impregnated shaped article,
whereby the surface of the shaped article is hardened.

2. The method according to claim 1, wherein the hardening treatment solution consists of colloidal silica, a metal ion free-chelating agent and a solvent.

3. The method according to claim 1 or 2, wherein the chelating agent is EDTA·H·3(NH₄) or EDTA·2H·2(NH₄).

4. The method according to claim 1, wherein the hardening treatment solution consists of colloidal silica, an acid and a solvent.

5. The method according to claim 1 or 4, wherein the acid is a hydroxy acid.

6. The method according to claim 1 or 4, wherein the acid is at least one selected from the group consisting of citric acid, malic acid, tartaric acid and salicylic acid.

7. The method according to any one of claims 1 to 6, wherein the colloidal silica is an acidic colloidal silica or a cationic colloidal silica.

8. The method according to claim 7, wherein a pH value of the acidic colloidal silica is 2 to 5.

9. The method according to any of claims 1 to 8, wherein the inorganic fibers have the following composition.
Total of SiO₂, ZrO₂, Al₂O₃ and TiO₂: 50wt% to 82 wt%
Total of alkali metal oxides and alkaline earth metal oxides:
18 wt% to 50 wt%

10. The method according to any of claims 1 to 8, wherein the inorganic fibers have the following composition.
SiO₂: 50 wt% to 82 wt%
Total of CaO and MgO: 10 wt% to 43 wt%

11. The method according to any of claims 1 to 8, wherein the inorganic fibers are Mg silicate fibers having the following composition or Ca silicate fibers having the following composition.
[Mg silicate fibers]
SiO₂: 66 wt% to 82 wt%
CaO: 1 wt% to 9 wt%
MgO: 10 wt% to 30 wt%
Al₂O₃: 3 wt% or less
Other oxides: less than 2 wt%
[Ca silicate fibers]
SiO₂: 66 wt% to 82 wt%
CaO: 10 wt% to 34 wt%
MgO: 3 wt% or less
Al₂O₃: 5 wt% or less
Other oxides: less than 2 wt%

12. The method according to any of claims 1 to 11, wherein the solvent is water, a monovalent alcohol or a divalent alcohol.

## Patentansprüche

1. Verfahren zum Härten eines Formkörpers bestehend aus:
- Imprägnieren eines Formkörpers umfassend 20 Gew.-% bis 99 Gew.-% an bio-löslichen anorganischen Fasern mit einer Härtungsbehandlungslösung von einer Oberfläche davon, wobei die bio-löslichen anorganischen Fasern 90 Gew.-% oder mehr an SiO₂, CaO und MgO umfassen und ein physiologisches Kochsalzlöslichkeitsverhältnis bei 40°C von 1% oder mehr haben, wobei die Härtungsbehandlungslösung aus kolloidalem Siliciumdioxid, einem Metallionen-freien Chelatbildner oder eine Säure, und einem Lösungsmittel besteht; und alsdann
- Trocknen des imprägnierten Formkörpers,
wodurch die Oberfläche des Formkörpers gehärtet wird.

2. Verfahren gemäss Anspruch 1, wobei die Härtungsbehandlungslösung aus kolloidalem Siliciumdioxid, einem Metallionen-freien Chelatbildner und einem Lösungsmittel besteht.

3. Verfahren gemäss Anspruch 1 oder 2, wobei der Chelatbildner EDTA·H·3(NH₄) oder EDTA·2H·2(NH₄) ist.

4. Verfahren gemäss Anspruch 1, wobei die Härtungsbehandlungslösung aus kolloidalem Siliciumdioxid, einer Säure und einem Lösungsmittel besteht.

5. Verfahren gemäss einem der Ansprüche 1 bis 4, wobei die Säure eine Hydroxysäure ist.

6. Verfahren gemäss einem der Ansprüche 1 bis 4, wobei die Säure mindestens eine Säure ist, die aus der Gruppe bestehend aus Zitronensäure, Apfelsäure, Weinsäure und Salicylsäure ausgewählt ist.

7. Verfahren gemäss einem der Ansprüche 1 bis 6, wobei das kolloidale Siliciumdioxid ein saures kolloidales Siliciumdioxid oder ein kationisches kolloidales Siliciumdioxid ist.

8. Verfahren gemäss Anspruch 7, wobei ein pH-Wert des sauren kolloidalen Siliciumdioxids 2 bis 5 ist.

9. Verfahren gemäss einem der Ansprüche 1 bis 8, wobei die anorganischen Fasern die folgende Zusammensetzung haben.
Gesamtmenge an SiO₂, ZrO₂, Al₂O₃ und TiO₂: 50 Gew.-% bis 82 Gew.-%
Gesamtmenge an Alkalimetalloxiden und Erdalkalimetalloxiden: 18 Gew.-% bis 50 Gew.-%

10. Verfahren gemäss einem der Ansprüche 1 bis 8, wobei die anorganischen Fasern die folgende Zusammensetzung haben.
SiO₂: 50 Gew.-% bis 82 Gew.-%
Gesamtmenge an CaO und MgO: 10 Gew.-% bis 43 Gew.-%

11. Verfahren gemäss einem der Ansprüche 1 bis 8, wobei die anorganischen Fasern Mg Silikatfasern aufweisend die folgende Zusammensetzung oder Ca Silikatfasern aufweisend die folgende Zusammensetzung sind.
[Mg Silikatfasern]
SiO₂: 66 Gew.-% bis 82 Gew.-%
CaO: 1 Gew.-% bis 9 Gew.-%
MgO: 10 Gew.-% bis 30 Gew.-%
Al₂O₃: 3 Gew.-% oder weniger
Andere Oxide: weniger als 2 Gew.-%
[Ca Silikatfasern]
SiO₂: 66 Gew.-% bis 82 Gew.-%
CaO: 10 Gew.-% bis 34 Gew.-%
MgO: 3 Gew.-% oder weniger
Al₂O₃: 5 Gew.-% oder weniger
Andere Oxide: weniger als 2 Gew.-%

12. Verfahren gemäss einem der Ansprüche 1 bis 11, wobei das Lösungsmittel Wasser, ein einwertiger Alkohol oder ein zweiwertiger Alkohol ist.

## Revendications

1. Un procédé de durcissement d'un article formé consistant à :
imprégner un article formé comprenant 20 % en poids à 99 % en poids de fibres inorganiques bio-solubles à l'aide d'une solution de traitement de durcissement à partir d'une surface de celui-ci, les fibres inorganiques bio-solubles comprenant 90 % en poids ou plus de SiO₂, CaO et MgO et ayant un rapport de dissolution en solution physiologique à 40 °C de 1% ou plus, la solution de traitement de durcissement consistant de silice colloïdale, d'un agent chélateur libre de ions métalliques ou d'un acide, et un solvant ; et subséquemment
sécher l'article formé imprégné,
selon quoi la surface de l'article formé est durcie.

2. Le procédé selon la revendication 1, dans lequel la solution de traitement de durcissement consiste de silice colloïdale, d'un agent chélateur libre d'ions métalliques et d'un acide et d'un solvant.

3. Le procédé selon la revendication 1 ou 2, dans lequel l'agent chélateur est EDTA H₃(NH₄) ou EDTA H₂(NH₄)₂.

4. Le procédé selon la revendication 1, dans lequel la solution de traitement de durcissement consiste de silice colloïdale, d'un acide et d'un solvant.

5. Le procédé selon la revendication 1 ou 4, dans lequel l'acide est un acide hydroxy.

6. Le procédé selon la revendication 1 ou 4, dans lequel l'acide est au moins un choisi parmi le groupe consistant d'acide citrique, d'acide malique, d'acide tartrique, d'acide salicylique.

7. Le procédé selon l'une quelconque des revendications 1 ou 6, dans lequel la silice colloïdale est une silice colloïdale acide ou une silice colloïdale cationique.

8. Le procédé selon la revendication 7, dans lequel la valeur pH de la silice colloïdale acide est de 2 à 5.

9. Le procédé selon l'une quelconque des revendications 1 à 8, dans lequel les fibres inorganiques ont la composition suivante
Total de SiO₂, ZrO₂, Al₂O₃ et TiO₂ : 50 % en poids à 82 % en poids
Total d'oxydes de métaux alcalins et d'oxydes de métaux alcalinoterreux : 18 % en poids à 50 % en poids.

10. Le procédé selon l'une quelconque des revendications 1 à 8, dans lequel les fibres inorganiques ont la composition suivante
SiO₂ : 50 % en poids à 82 % en poids
Total de CaO et MgO : 1 % en poids à 43 % en poids.

11. Le procédé selon l'une quelconque des revendications 1 à 8, dans lequel les fibres inorganiques sont des fibres de silicate Mg ayant la composition suivante ou des fibres de silicate Ca ayant la composition suivante :
[fibres de silicate Mg]
SiO₂ : 66 % en poids à 82 % en poids
CaO : 1 % en poids à 9 % en poids
MgO : 10 % en poids à 30 % en poids
Al₂O₃ : 3 % en poids ou moins
Autres oxydes : moins de 2 % en poids
[fibres de silicate Ca]
SiO₂ : 66 % en poids à 82 % en poids
CaO : 10 % en poids à 34 % en poids
MgO : 3 % en poids ou moins
Al₂O₃ : 5 % en poids ou moins
Autres oxydes : moins de 2 % en poids

12. Le procédé selon l'une quelconque des revendications 1 à 11, dans lequel le solvant est l'eau, un alcool monovalent ou un alcool divalent.
